# EUROPEAN PATENT APPLICATION

(11) **EP 1 617 128 A2**
(43) Date of publication of application: **18.01.2006**
(21) Application number: 05254374.1
(22) Date of filing: 13.07.2005
(51) Int. Cl.: F16M 13/02

(54) **Releasable mounting apparatus**

(30) Priority: 16.07.2004 GB 0415965
(71) Applicant: Audio Partnership Plc, London SE1 4BB (GB)
(72) Inventor: Stockley, Richard Audio Partnership PLC, London SE1 4BB (GB); Foy, Graeme Audio Partnership PLC, London SE1 4BB (GB)
(74) Representative: Evens, Paul Jonathan

(57) **Abstract**

Apparatus (10) for releasably mounting an article in a blind opening in a wall. The apparatus (10) comprises: a body (20) having a base (22) for attachment to an article to be mounted in a wall opening; a member (30) supported on the body and spaced from the base; an arm (40) mounted on the member and moveable from an inoperative position to an operative position projecting to one side of the body for bearing against a surrounding wall surface; and a mechanism (26) for releasably securing the arm (40) in the inoperative position.

## Description

The present invention relates to apparatus for releasably mounting an article in a blind opening in a wall or the like, and more specifically but not exclusively to apparatus for mounting a loudspeaker in an opening in a wall.

It is well known in the art to provide discreet loudspeaker installations in a building. In-wall clamps, which are intended to be mounted in a wall (e.g. stud wall) and clamp a loudspeaker thereto, are often used in such installations as an alternative to unsightly brackets or other forms of external support. However, in use part of an in-wall clamp is mounted inside the wall, thus compromising accessibility and making servicing (e.g. fitting or removal) of in-wall clamps difficult. Accordingly, the present applicant has appreciated the need for an improved in-wall clamp which overcomes or at least alleviates some of the problems associated with conventional in-wall clamps.

In accordance with a first aspect of the present invention there is provided apparatus for releasably mounting an article in a blind opening in a wall, comprising: a body having a base for attachment to an article to be mounted in a wall opening; a member supported on the body and spaced from the base; and an arm mounted on the member and with a portion moveable from an inoperative position substantially aligned with the body to an operative position substantially spaced from and projecting to one side of the body for bearing against a surrounding wall surface; and a mechanism for releasably securing the arm in the inoperative position.

In this way, apparatus is provided for forming an in-wall clamp which may be locked or at least held in the inoperative (or service) position during installation and removal of the clamp in or from a surrounding wall (e.g. stud wall) or the like, such as furniture. In the inoperative position, the arm is retracted to an extent whereby the article may be removed from the opening in the wall without the arm fouling the surrounding wall (i.e. close enough to avoid snagging of the arm).

In one embodiment, the mechanism has a positive engaging action, for example a snap-fit action. For example, the mechanism may comprise a part configured to trap the arm (directly or indirectly) in the inoperative position. The part may be resilient with flexure thereof providing a resistive force to retain the arm in the inoperative position. The resilient part may have a protuberant component (e.g. flange or lip) against which the arm bears and passes when moving to the inoperative position. The arm may be released from the mechanism by overcoming the resistive force.

The member may be moveable relative to the base to adjust spacing therebetween. In this way, the apparatus may be configured for use with different thicknesses of wall cladding.

In one embodiment, the member comprises a carriage which is moveable along a notional line extending between the base and the member. The carriage may be moveable between a first position furthest from the base and a second position closer to the base. The mechanism may be configured to engage either the arm, the carriage, or both.

The carriage may be mounted on a rotatable shaft housed by the body, the carriage and the rotatable shaft having interengaging threaded profiles. The rotatable shaft may be constrained to rotate within the body, with shaft rotation producing linear movement of the carriage relative to the body between the first and second positions. The rotatable shaft may have a drive face accessible adjacent or through the base. In this way, the rotatable shaft may be rotated via the drive face even once the apparatus is mounted in a wall.

The mechanism may be configured to move the arm from the operative position to the inoperative position as the carriage moves from the second position to the first position. For example, the mechanism may comprise a protuberance configured to be slidingly engaged by the arm and urge the arm into the inoperative position as the carriage moves towards the first position.

The arm may be pivotally mounted to the member. For example, the arm may be configured to pivot between the inoperative and operative positions about an axis which is substantially perpendicular to a notional line extending between the base and member.

The arm may be resiliently biased to adopt the operative position when possible. For example, the arm may be pivotally coupled to the member via a resilient member (e.g. a spring).

The arm may further comprise a resilient part for mechanically decoupling or isolating the arm from a surrounding wall surface. In this way, vibrations originating from an article (e.g. loudspeaker) may be damped to reduce unwanted interaction between the article and the wall. In one form, the arm may comprise a rubber foot for engaging a surrounding wall surface when the arm is in the operative position and bearing against the surrounding wall surface.

In accordance with a second aspect of the present invention there is provided apparatus for releasably mounting an article in a blind opening in a wall, comprising: a body having a base for attachment to an article to be mounted in a wall opening; a member supported on the body and spaced from the base; and an arm mounted on the member and with a portion moveable from an inoperative position to an inoperative position substantially aligned with the body to an operative position substantially spaced from and projecting to one side of the body for bearing against a surrounding wall surface; characterised in that the arm is configured to pivot between the inoperative and operative positions about an axis which is substantially perpendicular to a notional line extending between the base and member.

The member may be moveable relative to the base to adjust spacing therebetween. In this way, the apparatus may be configured for use with different thicknesses of wall cladding. The member may comprise a carriage moveable along the notional line. The carriage may be moveable along the notional line between a first position furthest from the base and a second position closer to the base.

The carriage may be mounted on a rotatable shaft housed by the body, the carriage and the rotatable shaft having interengaging threaded profiles. The rotatable shaft may be constrained to rotate within the body, with shaft rotation producing linear movement of the carriage relative to the body between the first and second positions. The rotatable shaft may have a drive face accessible adjacent or through the base. In this way, the rotatable shaft may be rotated via the drive face even once the apparatus is mounted in a wall.

The arm may be configured to move from the operative position to the inoperative position as the carriage moves from the second position to the first position. For example, the body may comprise a protuberance configured to be slidingly engaged by the arm and urge the arm into the inoperative position as the carriage moves towards the first position.

The arm may be resiliently biased to adopt the operative position when possible. For example, the arm may be pivotally coupled to the member via a resilient member (e.g. a spring).

The arm may further comprise a resilient part for mechanically decoupling or isolating the arm from a surrounding wall surface. In this way, vibrations originating from an article (e.g. loudspeaker) may be damped to reduce unwanted interaction between the article and the wall. In one form, the arm may comprise a rubber foot for engaging a surrounding wall surface when the arm is in the operative position and bearing against the surrounding wall surface.

An embodiment of the present invention will now be described with reference to the following drawings in which:
Figure 1 is a perspective view of apparatus in accordance with a first embodiment of the present invention in its service position;
Figure 2 is a perspective view of the apparatus Figure 1 in an operative position;
Figure 3 is a schematic side view of the apparatus of Figure 1 in its service position;
Figure 4 is a schematic view of the apparatus of Figure 1 from another side;
Figure 5 is a schematic cross-sectional view of a loudspeaker assembly comprising the apparatus of Figure 1 before being mounted to a wall surface;
Figure 6 is a schematic cross-sectional view of the loudspeaker assembly of Figure 5 in its service position during attachment to a wall surface, and
Figure 7 is a schematic cross-sectional view of the loudspeaker assembly of Figure 5 in its operative position and mounted to a wall surface;
Figure 8 is a perspective view of apparatus in accordance with a second embodiment of the present invention in an operative position;
Figure 9 is a schematic cross-sectional view of the apparatus of Figure 8 in an operative position; and
Figure 10 is a schematic cross-sectional view of the apparatus of Figure 9 in its service position.

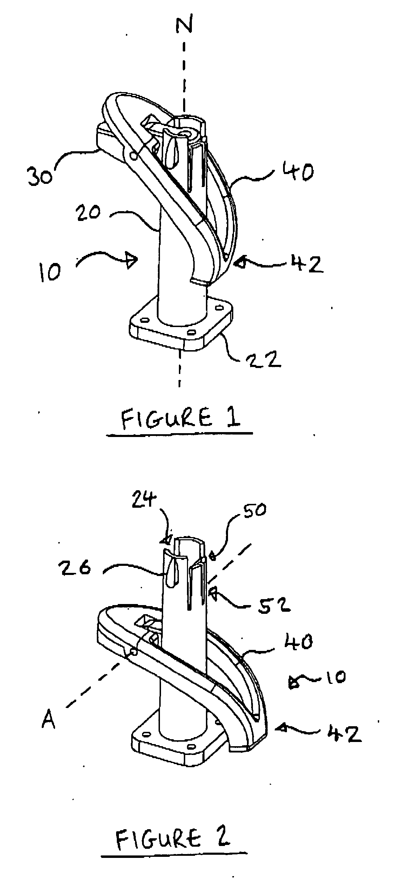

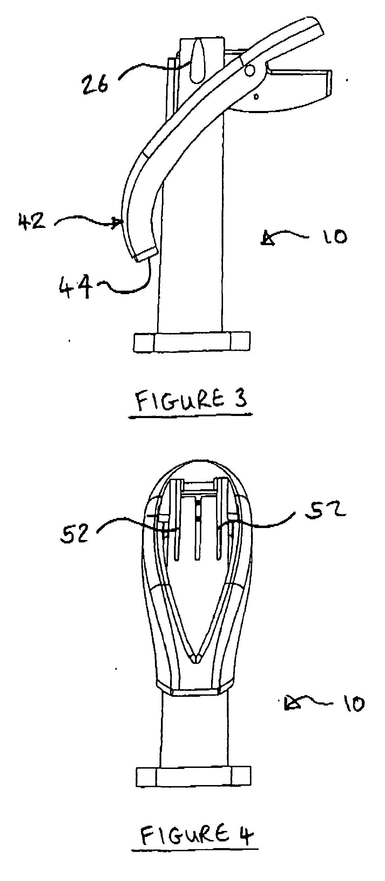

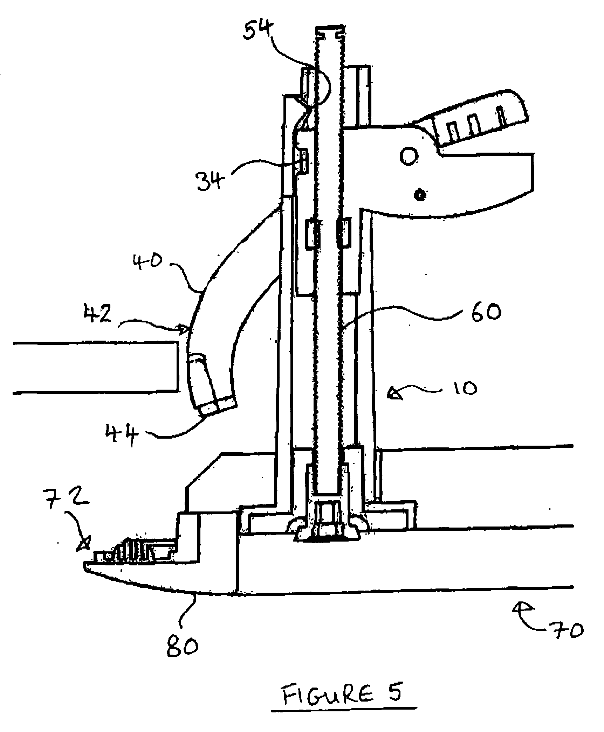

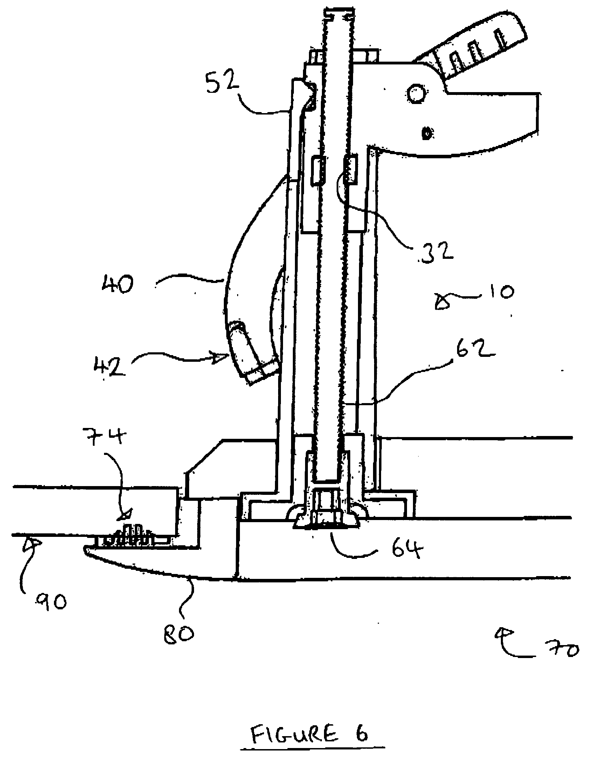

Figures 1 to 7 show apparatus 10 comprising: an elongate body 20 having a base 22 for attachment to an article (see Figures 5 to 7) and a slot (e.g. slit) 24 extending axially along the body; a carriage 30 supported on the body 20 and moveable along the slot 24, the carriage 30 and the base 22 defining a notional line "N"; an arm 40 pivotally mounted to the carriage 30 and with a portion 42 moveable about an axis 'A' (perpendicular to the notional line "N") from an inoperative position substantially adjacent and aligned with the body 20 (as shown in Figure 1) to an operative position substantially spaced from and projecting to one side of the body 20 (as shown in Figure 2); and a mechanism 50 for releasably securing the arm in the inoperative position.

The carriage 30 is mounted in the body 20 on a rotatable shaft 60 which is housed by the body 20. The carriage 30 and the rotatable shaft 60 have interengaging threaded profiles 32, 62. The rotatable shaft 60 has a drive face 64 located at base 22 and is constrained to rotate relative to the body 20. Rotation of the drive face 64 (and thus the rotatable shaft 60) causes the carriage 30 to move along the slot 24. The carriage 30 is moveable in this way from a first position, furthest from base 22, to a second position, closer to base 22.

The carriage 30 includes a resilient member (not shown) for biasing the arm 40 to adopt the operative position. The body 20 includes a curved protuberance 26 to slidingly engage the arm 40 and urge the arm into the inoperative position as the carriage 30 moves towards the first position. In addition, mechanism 50 comprises a pair of resilient parts or prongs 52, each part 52 having a first end coupled to the body 20 and a second end comprising a protuberant component 54 (e.g. lip or flange) configured to engage a corresponding recess 34 in the carriage 30 as the arm 40 moves into the first, and thus inoperative, position.

The portion 42 of arm 40 includes a rubber foot 44 for mechanically damping the arm 40 to reduce transmission of vibrations from the arm to a surrounding wall surface when the arm is in the operative position and bearing against the surrounding wall surface.

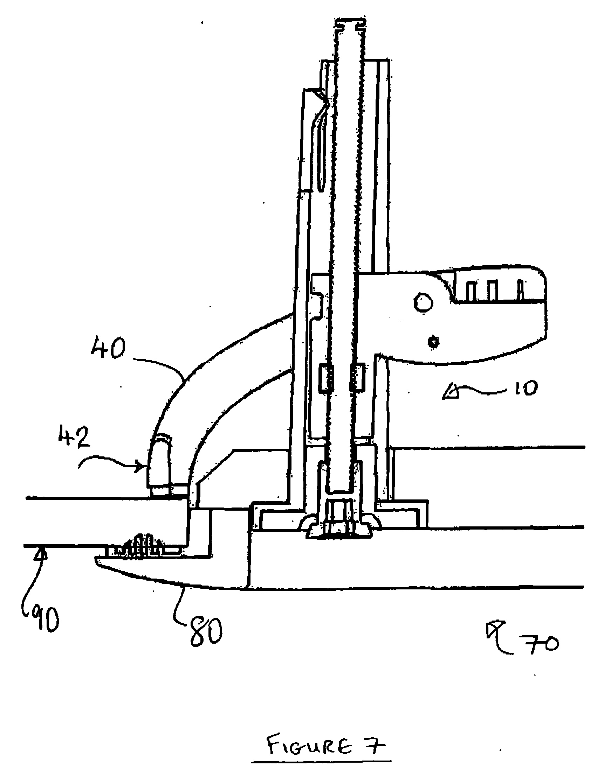

Figures 5 to 7 show a loudspeaker assembly 70 comprising: apparatus 10 and a frame 80. Frame 80 includes a flange 72 which in combination with the arm 40 forms a set of jaws which can move together to clamp the loudspeaker assembly to a wall surface 90. Flange 72 includes a series of ridges or teeth 74 configured to grip into the wall surface 90 when the loudspeaker assembly 70 is attached to the wall surface 90 (as shown in Figure 7).

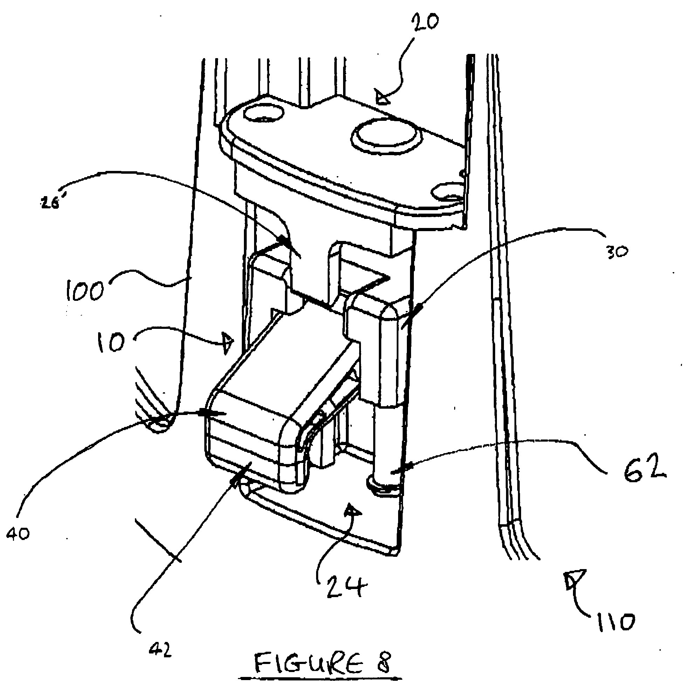

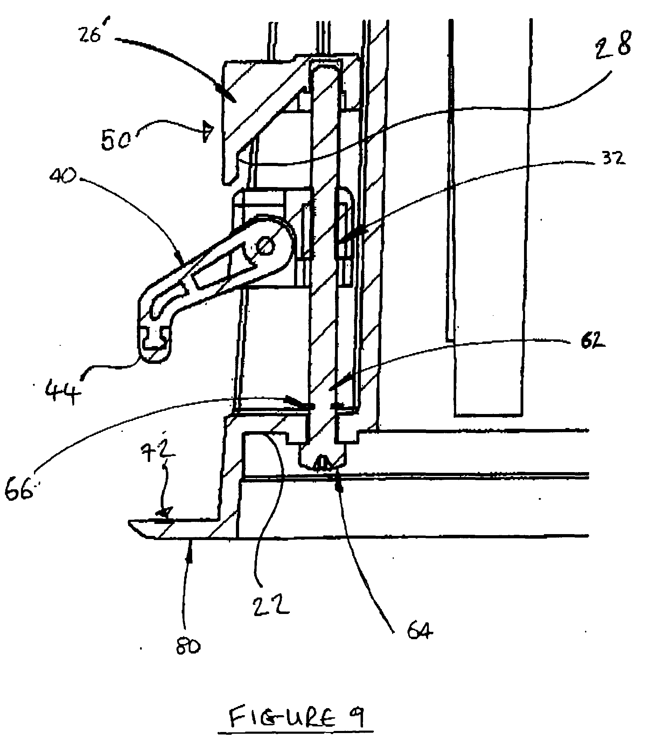

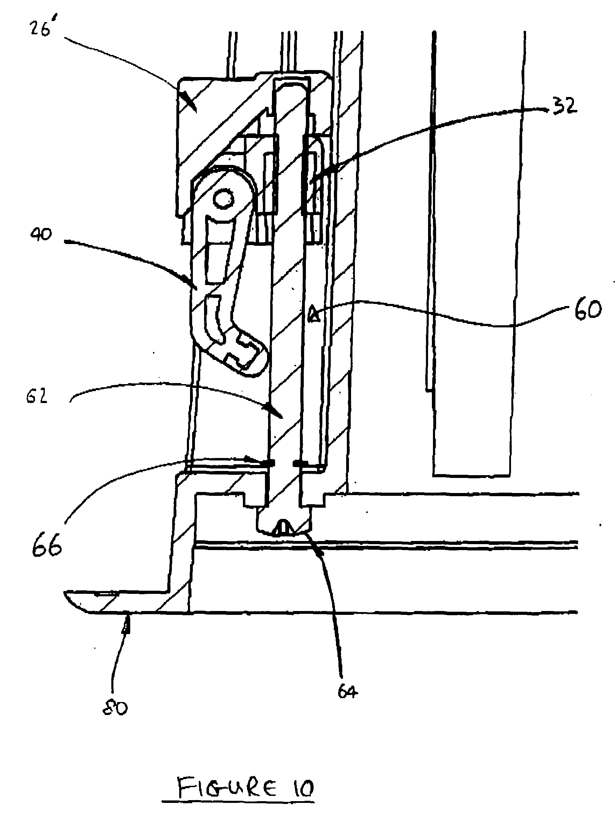

Figures 8 to 10 show a second embodiment of the present invention in which the apparatus 10 is formed as an integral part of a chassis 100 of a loudspeaker assembly 110 (e.g. is integrally moulded as a part of the chassis 100). Features in common with the first embodiment of the present invention are labelled accordingly.

The rotatable shaft 60 has a drive face 64 located at base 22 and is constrained by protuberant member 66 to rotate relative to the body 20. Rotation of the drive face 64 (and thus the rotatable shaft 60) causes the carriage 30 to move along the slot 24. The carriage 30 is moveable in this way between a first position, furthest from base 22, and a second position, closer to base 22.

The carriage 30 includes a resilient member (not shown) for biasing the arm 40 to adopt the operative position. Mechanism 50 provided on the body 20 includes a protuberant member 26' to slidingly engage the arm 40 and urge the arm into the inoperative position as the carriage 30 moves towards the first position. The protuberant member 26' also includes an inner surface 28 for abutting the arm 40 and trapping the arm 40 in the inoperative position when the carriage is in the first position. Once trapped in the inoperative position, the arm 40 is released by rotating the drive face 64 in a counter direction to move the carriage 30 away from the first position and towards the second position.

## Claims

1. Apparatus (10) for releasably mounting an article in a blind opening in a wall, comprising: a body (20) having a base (22) for attachment to an article to be mounted in a wall opening; a member (30) supported on the body (20) and spaced from the base (22); and an arm (40) mounted on the member (30) and with a portion (42) moveable from an inoperative position substantially aligned with the body (20) to an operative position substantially spaced from and projecting to one side of the body (20) for bearing against a surrounding wall surface; and a mechanism (50) for releasably securing the arm (40) in the inoperative position.

2. Apparatus (10) according to claim 1, wherein the mechanism (50) has a positive engaging action.

3. Apparatus (10) according to claim 2, wherein the mechanism (50) has a snap-fit action.

4. Apparatus (10) according to any of the preceding claims, wherein the member (30) comprises a carriage which is moveable along a notional line extending between the base (22) and the member (30), the carriage being moveable between a first position furthest from the base (22) and a second position closer to the base (22), with the arm (40) being configured to move from the operative position to the inoperative position in dependence upon the position of the carriage along the notional line.

5. Apparatus (10) according to claim 4, wherein the arm (40) is configured to move from the operative position to the inoperative position as the carriage moves from the second position to the first position.

6. Apparatus (10) according to claim 4 or claim 5, wherein the mechanism (50) is configured to engage at least one of: the arm (40) and the carriage.

7. Apparatus (10) according to any of claims 4 to 6, wherein the carriage is mounted on a rotatable shaft (60) housed by the body (20), the carriage and the rotatable shaft (60) having interengaging threaded profiles (32,62), the rotatable shaft (60) being constrained to rotate within the body (20), with shaft rotation producing linear movement of the carriage relative to the body (20) between the first and second positions.

8. Apparatus (10) according to any of the preceding claims, wherein the arm (40) is resiliently biased to adopt the operative position when possible.

9. Apparatus (10) according to any of the preceding claims, wherein the arm (40) further comprise a resilient part (44) for mechanically decoupling the arm (40) from a surrounding wall surface.

10. Apparatus (10) according to any of the preceding claims, wherein the arm (40) is configured to pivot between the inoperative and operative positions about an axis which is substantially perpendicular to a notional line extending between the base (22) and member (30).

11. A loudspeaker assembly (70)(110) configured to be releasably mounted in a blind opening in a wall, comprising: a body (20) for housing a loudspeaker drive unit, the body (20) having a base (72) which in use is configured to engage a surrounding wall external surface; a member (30) supported on the body (20) and spaced from the base (72); an arm (40) mounted on the member (30) and with a portion (42) moveable from an inoperative position substantially aligned with the body (20) to an operative position substantially spaced from and projecting to one side of the body (20) for bearing against a surrounding wall internal surface; and a mechanism (50) for releasably securing the arm (40) in the inoperative position.
